# EUROPEAN PATENT APPLICATION

(11) **EP 3 093 473 A1**
(43) Date of publication of application: **16.11.2016**
(21) Application number: 16168355.2
(22) Date of filing: 04.05.2016
(51) Int. Cl.: F02K 3/06, F02C 3/107, F02C 7/36

(54) **METHOD FOR SETTING A GEAR RATIO OF A FAN DRIVE GEAR SYSTEM OF A GAS TURBINE ENGINE**

(30) Priority: 06.05.2015 US 201514705459
(71) Applicant: United Technologies Corporation, Farmington, CT 06032 (US)
(72) Inventor: SHERIDAN, William G., Southington, CT Connecticut 06489 (US); HASEL, Karl L., Manchester, CT Connecticut 06040 (US)
(74) Representative: Hull, James Edward

(57) **Abstract**

A gas turbine engine (20) includes a fan section (22) including a fan (36) rotatable about an axis of rotation of the gas turbine engine (20). A speed reduction device (45) is in communication with the fan (36). The speed reduction device (45) includes a star drive gear system (50) with a star gear ratio of at least 1.5. A fan (36) blade tip speed of the fan is less than 1400 fps (427 m/s). A bypass ratio is between 11.0 and 22.0.

## Description

### BACKGROUND

This disclosure relates to a gas turbine engine, and more particularly to a method for setting a gear ratio of a fan drive gear system of a gas turbine engine.

A gas turbine engine may include a fan section, a compressor section, a combustor section, and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. Among other variations, the compressor section can include low and high pressure compressors, and the turbine section can include low and high pressure turbines.

Typically, a high pressure turbine drives a high pressure compressor through an outer shaft to form a high spool, and a low pressure turbine drives a low pressure compressor through an inner shaft to form a low spool. The fan section may also be driven by the inner shaft. A direct drive gas turbine engine may include a fan section driven by the low spool such that a low pressure compressor, low pressure turbine, and fan section rotate at a common speed in a common direction.

A speed reduction device, which may be a fan drive gear system or other mechanism, may be utilized to drive the fan section such that the fan section may rotate at a speed different than the turbine section. This allows for an overall increase in propulsive efficiency of the engine. In such engine architectures, a shaft driven by one of the turbine sections provides an input to the speed reduction device that drives the fan section at a reduced speed such that both the turbine section and the fan section can rotate at closer to optimal speeds.

Although gas turbine engines utilizing speed change mechanisms are generally known to be capable of improved propulsive efficiency relative to conventional engines, gas turbine engine manufacturers continue to seek further improvements to engine performance including improvements to thermal, transfer and propulsive efficiencies.

### SUMMARY

In one exemplary embodiment, a gas turbine engine includes a fan section including a fan rotatable about an axis of rotation of the gas turbine engine. A speed reduction device is in communication with the fan. The speed reduction device includes a star drive gear system with a star gear ratio of at least 1.5. A fan blade tip speed of the fan is less than 1400 fps (427 m/s). A bypass ratio is between about 11.0 and about 22.0.

In a further embodiment of the above, the speed reduction device includes a star gear system gear ratio of at least 2.6.

In a further embodiment of any of the above, the speed reduction device includes a system gear ratio less than or equal to 4.1.

In a further embodiment of any of the above, the star system includes a sun gear, a plurality of star gears, a ring gear, and a carrier.

In a further embodiment of any of the above, each of the plurality of star gears includes at least one bearing.

In a further embodiment of any of the above, the carrier is fixed from rotation.

In a further embodiment of any of the above, a low pressure turbine is mechanically attached to the sun gear.

In a further embodiment of any of the above, a fan section is mechanically attached to the ring gear.

In a further embodiment of any of the above, an input of the speed reduction device is rotatable in a first direction and an output of the speed reduction device is rotatable in a second direction opposite to the first direction.

In a further embodiment of any of the above, a low pressure turbine section that is in communication with the speed reduction device is included. The low pressure turbine section includes at least three stages and no more than four stages.

In a further embodiment of any of the above, the fan blade tip speed of the fan is greater than 1000 fps (305 m/s).

In a further embodiment of any of the above, there is a low pressure turbine which is one of three turbine rotors. The low pressure turbine drives the fan section and the other two of the three turbine rotors each drive a compressor section.

In a further embodiment of any of the above, there is a high pressure turbine. Each of a low pressure turbine and the high pressure turbine drives a compressor rotor.

In a further embodiment of any of the above, the speed reduction device is positioned intermediate a compressor rotor driven by the low pressure turbine and the fan section.

In a further embodiment of any of the above, the speed reduction device is positioned intermediate the low pressure turbine and the compressor rotor driven by the low pressure turbine.

### BRIEF DESCRIPTION OF THE DRAWINGS

Figure 1 illustrates a schematic, cross-sectional view of an example gas turbine engine.
Figure 2 illustrates a schematic view of one configuration of a low speed spool that can be incorporated into a gas turbine engine.
Figure 3 illustrates a fan drive gear system that can be incorporated into a gas turbine engine.
Figure 4 shows another embodiment.
Figure 5 shows yet another embodiment.

### DETAILED DESCRIPTION

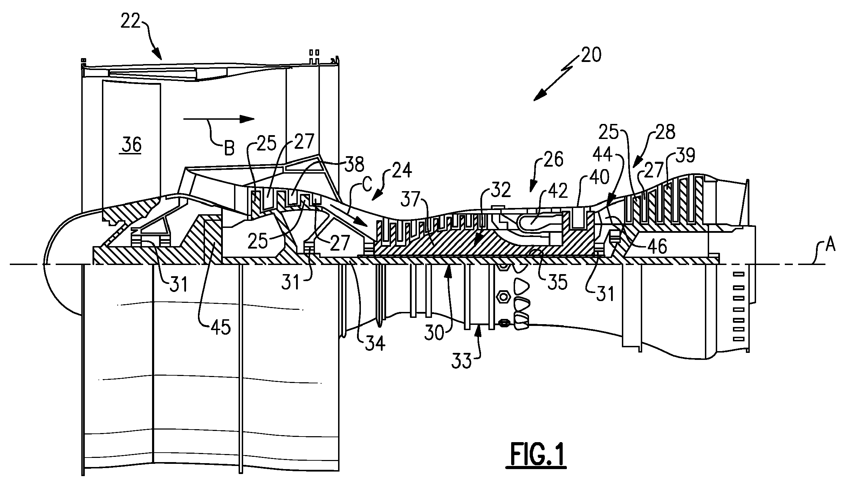

Figure 1 schematically illustrates a gas turbine engine 20. The exemplary gas turbine engine 20 is a two-spool turbofan engine that generally incorporates a fan section 22, a compressor section 24, a combustor section 26 and a turbine section 28. Alternative engines might include an augmentor section (not shown) among other systems or features. The fan section 22 drives air along a bypass flow path B, while the compressor section 24 drives air along a core flow path C for compression and communication into the combustor section 26. The hot combustion gases generated in the combustor section 26 are expanded through the turbine section 28. Although depicted as a two-spool turbofan gas turbine engine in the disclosed non-limiting embodiment, it should be understood that the concepts described herein are not limited to two-spool turbofan engines and these teachings could extend to other types of engines, including but not limited to, three-spool engine architectures.

The exemplary gas turbine engine 20 generally includes a low speed spool 30 and a high speed spool 32 mounted for rotation about an engine centerline longitudinal axis A. The low speed spool 30 and the high speed spool 32 may be mounted relative to an engine static structure 33 via several bearing systems 31. It should be understood that other bearing systems 31 may alternatively or additionally be provided, and the location of bearing systems 31 may be varied as appropriate to the application.

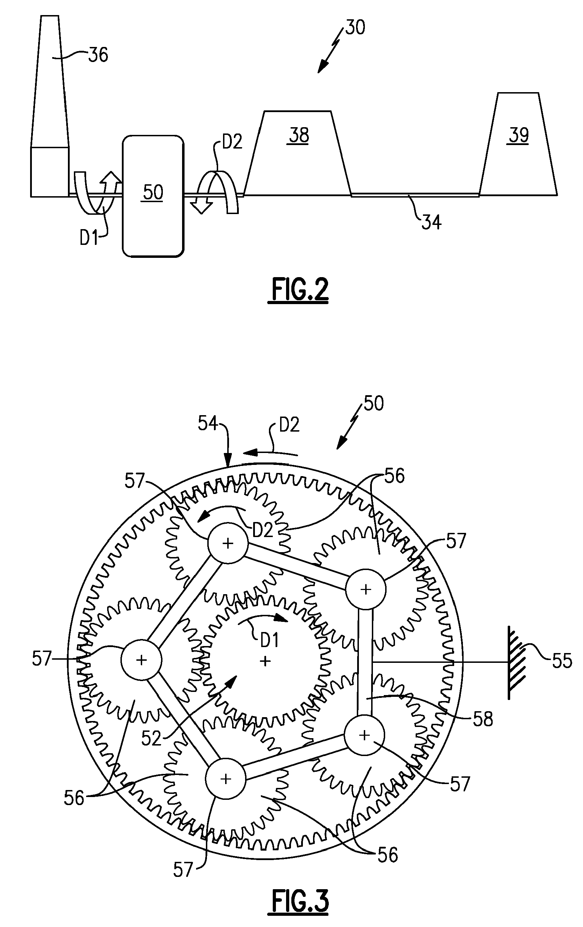

The low speed spool 30 generally includes an inner shaft 34 that interconnects a fan 36, a low pressure compressor 38 and a low pressure turbine 39. The inner shaft 34 can be connected to the fan 36 through a speed change mechanism, which in exemplary gas turbine engine 20 is illustrated as a geared architecture 45, such as a fan drive gear system 50 (see Figures 2 and 3). The speed change mechanism drives the fan 36 at a lower speed than the low speed spool 30. The high speed spool 32 includes an outer shaft 35 that interconnects a high pressure compressor 37 and a high pressure turbine 40. In this embodiment, the inner shaft 34 and the outer shaft 35 are supported at various axial locations by bearing systems 31 positioned within the engine static structure 33.

A combustor 42 is arranged in exemplary gas turbine 20 between the high pressure compressor 37 and the high pressure turbine 40. A mid-turbine frame 44 may be arranged generally between the high pressure turbine 40 and the low pressure turbine 39. The mid-turbine frame 44 can support one or more bearing systems 31 of the turbine section 28. The mid-turbine frame 44 may include one or more airfoils 46 that extend within the core flow path C. It will be appreciated that each of the positions of the fan section 22, compressor section 24, combustor section 26, turbine section 28, and fan drive gear system 50 may be varied. For example, gear system 50 may be located aft of combustor section 26 or even aft of turbine section 28, and fan section 22 may be positioned forward or aft of the location of gear system 50.

The inner shaft 34 and the outer shaft 35 are concentric and rotate via the bearing systems 31 about the engine centerline longitudinal axis A, which is co-linear with their longitudinal axes. The core airflow is compressed by the low pressure compressor 38 and the high pressure compressor 37, is mixed with fuel and burned in the combustor 42, and is then expanded over the high pressure turbine 40 and the low pressure turbine 39. The high pressure turbine 40 and the low pressure turbine 39 rotationally drive the respective high speed spool 32 and the low speed spool 30 in response to the expansion.

In a non-limiting embodiment, the gas turbine engine 20 is a high-bypass geared aircraft engine. In a further example, the gas turbine engine 20 bypass ratio is greater than about six. The geared architecture 45 can include an epicyclic gear train, such as a planetary gear system, a star gear system, or other gear system. The geared architecture 45 enables operation of the low speed spool 30 at higher speeds, which can enable an increase in the operational efficiency of the low pressure compressor 38 and low pressure turbine 39, and render increased pressure in a fewer number of stages.

The pressure ratio of the low pressure turbine 39 can be pressure measured prior to the inlet of the low pressure turbine 39 as related to the pressure at the outlet of the low pressure turbine 39 and prior to an exhaust nozzle of the gas turbine engine 20. In one non-limiting embodiment, the bypass ratio of the gas turbine engine 20 is greater than about ten, the fan diameter is significantly larger than that of the low pressure compressor 38, and the low pressure turbine 39 has a pressure ratio that is greater than about five. In another non-limiting embodiment, the bypass ratio is greater than 11 and less than 22, or greater than 13 and less than 20. It should be understood, however, that the above parameters are only exemplary of a geared architecture engine or other engine using a speed change mechanism, and that the present disclosure is applicable to other gas turbine engines, including direct drive turbofans. In one non-limiting embodiment, the low pressure turbine 39 includes at least one stage and no more than eight stages, or at least three stages and no more than six stages. In another non-limiting embodiment, the low pressure turbine 39 includes at least three stages and no more than four stages.

In this embodiment of the exemplary gas turbine engine 20, a significant amount of thrust is provided by the bypass flow path B due to the high bypass ratio. The fan section 22 of the gas turbine engine 20 is designed for a particular flight condition--typically cruise at about 0.8 Mach and about 35,000 feet (10,668 m). This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. In another non-limiting embodiment of the example gas turbine engine 20, the Fan Pressure Ratio is less than 1.38 and greater than 1.25. In another non-limiting embodiment, the fan pressure ratio is less than 1.48. In another non-limiting embodiment, the fan pressure ratio is less than 1.52. In another non-limiting embodiment, the fan pressure ratio is less than 1.7. Low Corrected Fan Tip Speed is the actual fan tip speed divided by an industry standard temperature correction of [(Tram °R) / (518.7 °R)] ^{0.5}, where T represents the ambient temperature in degrees Rankine. The Low Corrected Fan Tip Speed according to one non-limiting embodiment of the example gas turbine engine 20 is less than about 1150 fps (351 m/s). The Low Corrected Fan Tip Speed according to another non-limiting embodiment of the example gas turbine engine 20 is less than about 1400 fps (427 m/s). The Low Corrected Fan Tip Speed according to another non-limiting embodiment of the example gas turbine engine 20 is greater than about 1000 fps (305 m/s).

Figure 2 schematically illustrates the low speed spool 30 of the gas turbine engine 20. The low speed spool 30 includes the fan 36, the low pressure compressor 38, and the low pressure turbine 39. The inner shaft 34 interconnects the fan 36, the low pressure compressor 38, and the low pressure turbine 39. The inner shaft 34 is connected to the fan 36 through the fan drive gear system 50. In this embodiment, the fan drive gear system 50 provides for counter-rotation of the low pressure turbine 39 and the fan 36. For example, the fan 36 rotates in a first direction D1, whereas the low pressure turbine 39 rotates in a second direction D2 that is opposite of the first direction D1.

Figure 3 illustrates one example embodiment of the fan drive gear system 50 incorporated into the gas turbine engine 20 to provide for counter-rotation of the fan 36 and the low pressure turbine 39. In this embodiment, the fan drive gear system 50 includes a star gear system with a sun gear 52, a ring gear 54 disposed about the sun gear 52, and a plurality of star gears 56 having journal bearings 57 positioned between the sun gear 52 and the ring gear 54. A fixed carrier 58 carries and is attached to each of the star gears 56. In this embodiment, the fixed carrier 58 does not rotate and is connected to a grounded structure 55 of the gas turbine engine 20.

The sun gear 52 receives an input from the low pressure turbine 39 (see Figure 2) and rotates in the first direction D1 thereby turning the plurality of star gears 56 in a second direction D2 that is opposite of the first direction D1. Movement of the plurality of star gears 56 is transmitted to the ring gear 54 which rotates in the second direction D2 opposite from the first direction D1 of the sun gear 52. The ring gear 54 is connected to the fan 36 for rotating the fan 36 (see Figure 2) in the second direction D2.

A star system gear ratio of the fan drive gear system 50 is determined by measuring a diameter of the ring gear 54 and dividing that diameter by a diameter of the sun gear 52. In one embodiment, the star system gear ratio of the geared architecture 45 is between 1.5 and 4.1. In another embodiment, the system gear ratio of the fan drive gear system 50 is between 2.6 and 4.1. When the star system gear ratio is below 1.5, the sun gear 52 is relatively much larger than the star gears 56. This size differential reduces the load the star gears 56 are capable of carrying because of the reduction in size of the star gear journal bearings 57. When the star system gear ratio is above 4.1, the sun gear 52 may be much smaller than the star gears 56. This size differential increases the size of the star gear 56 journal bearings 57 but reduces the load the sun gear 52 is capable of carrying because of its reduced size and number of teeth. Alternatively, roller bearings could be used in place of journal bearings 57.

Improving performance of the gas turbine engine 20 begins by determining fan tip speed boundary conditions for at least one fan blade of the fan 36 to define the speed of the tip of the fan blade. The maximum fan diameter is determined based on the projected fuel burn derived from balancing engine efficiency, mass of air through the bypass flow path B, and engine weight increase due to the size of the fan blades.

Boundary conditions are then determined for the rotor of each stage of the low pressure turbine 39 to define the speed of the rotor tip and to define the size of the rotor and the number of stages in the low pressure turbine 39 based on the efficiency of low pressure turbine 39 and the low pressure compressor 38.

Constraints regarding stress levels in the rotor and the fan blade are utilized to determine if the rotary speed of the fan 36 and the low pressure turbine 39 will meet a desired number of operating life cycles. If the stress levels in the rotor or the fan blade are too high, the gear ratio of the fan drive gear system 50 can be lowered and the number of stages of the low pressure turbine 39 or annular area of the low pressure turbine 39 can be increased.

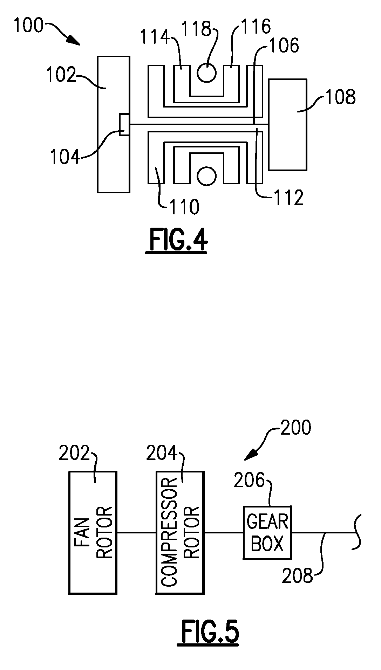

Figure 4 shows an embodiment 100, wherein there is a fan drive turbine 108 driving a shaft 106 to in turn drive a fan rotor 102. A gear reduction 104 may be positioned between the fan drive turbine 108 and the fan rotor 102. This gear reduction 104 may be structured and operate like the geared architecture 45 disclosed above. A compressor rotor 110 is driven by an intermediate pressure turbine 112, and a second stage compressor rotor 114 is driven by a turbine rotor 116. A combustion section 118 is positioned intermediate the compressor rotor 114 and the turbine section 116.

Figure 5 shows yet another embodiment 200 wherein a fan rotor 202 and a first stage compressor 204 rotate at a common speed. The gear reduction 206 (which may be structured as the geared architecture 45 disclosed above) is intermediate the compressor rotor 204 and a shaft 208 which is driven by a low pressure turbine section.

Although the different non-limiting embodiments are illustrated as having specific components, the embodiments of this disclosure are not limited to those particular combinations. It is possible to use some of the components or features from any of the non-limiting embodiments in combination with features or components from any of the other non-limiting embodiments.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would understand that certain modifications could come within the scope of this disclosure. For these reasons, the following claim should be studied to determine the true scope and content of this disclosure.

## Claims

1. A gas turbine engine (20) comprising:
a fan section including a fan (36) rotatable about an axis of rotation of the gas turbine engine (20); and
a speed reduction device (45) in communication with the fan (36), wherein the speed reduction device includes a star drive gear system (50) with a star system gear ratio of at least 1.5, a fan blade tip speed of the fan (36) is less than 1400 fps (427 m/s), and a bypass ratio is between 11.0 and 22.0.

2. The gas turbine engine (20) of claim 1, wherein the speed reduction device (45) includes a star system gear ratio of at least 2.6.

3. The gas turbine engine (20) of claim 1 or 2, wherein the speed reduction device (45) includes a star system gear ratio less than or equal to 4.1.

4. The gas turbine engine (20) of any preceding claim, wherein the star system (50) includes a sun gear (52), a plurality of star gears (56), a ring gear (54), and a carrier (58).

5. The gas turbine engine (20) of claim 4, wherein each of the plurality of star gears (56) includes at least one bearing (57).

6. The gas turbine engine (20) of claim 4 or 5, wherein the carrier (58) is fixed from rotation.

7. The gas turbine engine (20) of claim 4, 5 or 6, wherein a low pressure turbine (39) is mechanically attached to the sun gear (52).

8. The gas turbine engine (20) of any of claims 4 to 7, wherein a fan section (22) is mechanically attached to the ring gear (54).

9. The gas turbine engine (20) of any preceding claim, wherein an input of the speed reduction device (45) is rotatable in a first direction and an output of the speed reduction device (45) is rotatable in a second direction opposite to the first direction.

10. The gas turbine engine (20) of any preceding claim, including a low pressure turbine section (39) in communication with the speed reduction device (45), wherein the low pressure turbine section (39) includes at least three stages and no more than four stages.

11. The gas turbine engine (20) of claim 10, wherein the fan blade tip speed of the fan (36) is greater than 1000 fps (350 m/s).

12. The gas turbine engine (20) as recited in any preceding claim, wherein a or the low pressure turbine (39) is one of three turbine rotors, and the low pressure turbine (39) drives the fan section (22) and the other two of the three turbine rotors each drive a compressor section (24).

13. The gas turbine engine (20) as recited in any preceding claim, further comprising a high pressure turbine (40), with each of a or the low pressure turbine (39) and the high pressure turbine (40) driving a compressor rotor.

14. The gas turbine engine (20) as recited in claim 13, wherein the speed reduction device (45) is positioned intermediate a compressor rotor driven by the low pressure turbine (39) and the fan section (22).

15. The gas turbine engine (20) as recited in claim 13, wherein the speed reduction device (45) is positioned intermediate the low pressure turbine (39) and a compressor rotor driven by the low pressure turbine (39).
